# EUROPEAN PATENT SPECIFICATION

(11) **EP 2 951 125 B1**
(45) Date of publication and mention of the grant of the patent: **06.06.2018**
(21) Application number: 13873355.5
(22) Date of filing: 01.02.2013
(51) Int. Cl.: H01M 4/86, H01M 8/086, H01M 4/88, H01M 4/92

(54) **LIQUID-ELECTROLYTE FUEL-CELL ELECTRODES WITH SOLUBLE FLUOROPOLYMER COATING AND METHOD FOR MAKING SAME**
BRENNSTOFFZELLEN MIT FLÜSSIGEM ELEKTROLYTBRENNSTOFF MIT EINER LÖSLICHEN FLUORPOLYMERBESCHICHTUNG UND VERFAHREN ZUR HERSTELLUNG DAVON
ÉLECTRODES DE PILE À COMBUSTIBLE À ÉLECTROLYTE LIQUIDE À REVÊTEMENT FLUOROPOLYMÈRE SOLUBLE ET PROCÉDÉ DE FABRICATION ASSOCIÉ

(43) Date of publication of application: 09.12.2015
(73) Proprietor: Doosan Fuel Cell America, Inc., South Windsor CT 06074 (US)
(72) Inventor: CIPOLLINI, Ned E., East Windsor, Connecticut 06088 (US)
(74) Representative: Shanks, Andrew
(86) International application number: PCT/US2013/024280
(87) International publication number: WO 2014/120236

(56) References cited:
- US-A- 4 175 055
- US-A- 5 431 956
- US-A1- 2006 079 393
- US-A1- 2006 105 225
- US-A1- 2007 184 334
- US-A1- 2008 118 817
- US-A1- 2011 008 706
- US-A1- 2012 046 161
- US-A1- 2012 269 961
- US-A1- 2012 321 988

## Description

### BACKGROUND

This disclosure relates to electrodes for fuel cells and, more particularly, to electrodes having fluoropolymer treated catalysts for use in liquid electrolyte fuel cells such as phosphoric acid fuel cells.

In the fuel cell art, it is common to use electrodes (anodes and cathodes) which include electrode catalysts for enhancing fuel cell reactions. Fuel cell reactions require three phases: 1) access of gaseous reactants such as hydrogen on the anode or oxygen on the cathode, 2) the catalyst to supply or remove electrons of the reactions, and 3) electrolyte to supply or remove ionic reactants or products. With little electrolyte, the reactions are inhibited because ionic species cannot be supplied or removed at an adequate rate. However, in some settings, one of which is a phosphoric acid fuel cell (PAFC), phosphoric acid electrolyte can accumulate in excess near the catalyst. This inhibits access of gaseous reactants which reduces the effectiveness of the catalyst and, thereby, interferes with proper functioning of the fuel cell.

In order to address the balance between too little and too much phosphoric acid electrolyte, electrodes have been treated with fluoropolymer materials such as TEFLON®, which is a fluoropolymer marketed by Dupont. Addition of the fluoropolymer is intended to limit and control the phosphoric-acid film thickness.

All fluoropolymers presently used in PAFCs are supplied as aqueous dispersions. The particle sizes of these dispersions are larger than the catalyst particles. As such, when distributing such polymers through an electrode, the distribution is not always uniform as the fluoropolymer particles may clump and cause thick layers of fluoropolymer in some areas, with little fluoropolymer and thus thick layers of phosphoric acid in other areas. In this case, the thick fluoropolymer and phosphoric acid layers inhibit diffusion of reactants to the catalyst leading to problems in performance.

Known methods of making the electrode involve wet chemical floccing and dispersion of dry powder onto the electrode and this is cumbersome, costly and limiting in the thinness of the layer to be deposited.

Further, the electrode manufacturing process requires the fluoropolymer, typically polytetrafluoroethylene (PTFE), to be sintered at approximately 350°C which is undesirable for several reasons. Sintering adds a manufacturing step, is detrimental to the PTFE in the presence of catalyst, and causes oxidation of the electrode catalyst requiring a larger PTFE content to be used.

Typical PTFE used in the manufacture of electrodes has a glass transition temperature more than 150°C below the PAFC operating temperature, and thus the electrodes creep during operation, thereby decreasing their porosity and performance.

It is clear that the need exists for a solution to the various issues raised above. The present disclosure responds to this need. US2007184334 discloses a method for making an electrode for a phosphoric acid fuel cell, comprising the steps of combining catalyst particles with a fluoropolymer solution to form a catalyst and fluoropolymer dispersion containing catalyst particles coated with fluoropolymer, applying the coated catalyst particles to an electrode substrate and drying.

### SUMMARY OF THE DISCLOSURE

In accordance with the present disclosure, an electrode and method for making same, as well as the concomitant structure, have been provided which address the issues in connection with fluoropolymer distributed electrodes as discussed above.

In accordance with the present disclosure, an electrode for a phosphoric acid fuel cell (PAFC) is provided, comprising a phosphoric acid electrode; catalyst particles in the phosphoric acid electrode; and a fluoropolymer on the catalyst particles.

In addition, a method for making an electrode for a PAFC is provided, which comprises the steps of combining catalyst particles with a fluoropolymer solution to form a catalyst - fluoropolymer dispersion containing coated catalyst particles coated with fluoropolymer; and applying the coated catalyst particles to an electrode substrate.

It has been found that the benefit of fluoropolymers in the PAFC setting depends critically on the distribution of fluoropolymer. Relatively thin, uniform films of fluoropolymer lead to a more uniform distribution of phosphoric acid relative to the catalyst as well, and the method of the present disclosure helps to ensure a substantially uniform distribution of fluoropolymer.

When TEFLON® or other fluoropolymer is distributed through the electrode; the gaseous reactants must diffuse through fluoropolymer in addition to the films of phosphoric acid to reach the catalyst. Since the permeability of these gaseous reactants through fluoropolymers is at least 10X higher than through phosphoric acid, addition of fluoropolymer is beneficial to the operation of PAFCs in most cases, and especially when the fluoropolymer and phosphoric acid are kept in relatively thin, uniform films on the catalyst as is accomplished by the present disclosure.

Additional details of the present disclosure appear hereinbelow.

### BRIEF DESCRIPTION OF THE DRAWINGS

A detailed description of preferred embodiments follows, with reference to the attached drawings, wherein:
FIG. 1 is a flow chart which schematically illustrates a method for making an electrode according to the disclosure;
FIG. 2 compares the structure of an electrode of this disclosure to a state-of-the-art (SOA) PAFC electrode with PTFE at approximately 200X magnification.
FIG. 3 schematically illustrates the structure of a PAFC electrode;
FIG. 4 illustrates a magnified portion of the catalyst of a prior art electrode;
FIG. 5 schematically illustrates a magnified portion of an electrode according to this disclosure made with a soluble fluoropolymer for comparison with FIG. 4, and illustrates a coated aggregate of catalyst particles in accordance with the disclosure;
FIG. 6 shows the improved performance of the fluoropolymer and fabrication method of this disclosure over that of PTFE in SOA electrodes in a subscale cell operated under diffusion-limited performance; and
FIG. 7 shows the improved performance of this invention over SOA PAFC electrodes in a subscale cell run at typical stack operating conditions.

### DETAILED DESCRIPTION

The invention relates to an electrode structure for fuel cells, and especially to an electrode structure fabricated with catalyst and fluoropolymer which is particularly useful in a phosphoric acid fuel cell (PAFC).

It has been found that the electrode catalyst of a state-of-the-art PAFC tends to have its catalytic activity impaired by being coated with thick films of phosphoric acid and fluoropolymer during normal operation of the fuel cell. Phosphoric acid accumulates at the catalyst during normal operation, and efforts to control this accumulation using fluoropolymers has so far not fully solved that problem due to clumping and inconsistent positioning of the fluoropolymer.

According to the disclosure, a method is provided for keeping the catalyst uniformly coated with thin films of fluoropolymer and phosphoric acid to preserve the desired catalytic activity.

In accordance with the present disclosure, methods are provided for creating a relatively thin, uniform layer of fluoropolymer compound on the catalyst particles themselves, and then depositing such catalyst particles onto an electrode substrate. This advantageously places the fluoropolymer next to the catalyst, without creating fluoropolymer layers throughout the electrode which interfere with transmission of reactants to the catalyst. This further assures that the phosphoric acid films created in the electrode during normal operation will be uniform in thickness and of desired thickness. The desired thickness of the phosphoric acid film is a compromise between being thick enough for ionic conduction to minimize ionic-resistance losses in the electrode and being thin enough to minimize negative impact on diffusion of oxygen or hydrogen.

According to the disclosure, a soluble fluoropolymer is used to make a fluoropolymer solution which allows the fluoropolymer material to be placed in a thin and uniform layer over the catalyst, and this eliminates the problem of excessive fluoropolymer throughout the electrode. The use of this solution to place the fluoropolymer on the catalyst also eliminates the need for sintering, and certain amorphous fluoropolymer materials have sufficiently high glass temperatures that the resulting electrodes do not creep during operation. In addition, the amorphous fluoropolymer binds better to the catalyst, and especially to catalyst supported on carbon, and this can advantageously allow stabilization of the platinum particle size.

Finally, elimination of the sintering step and oxidation of the catalyst can also allow the manufacture of an electrode with less fluoropolymer material requirements.

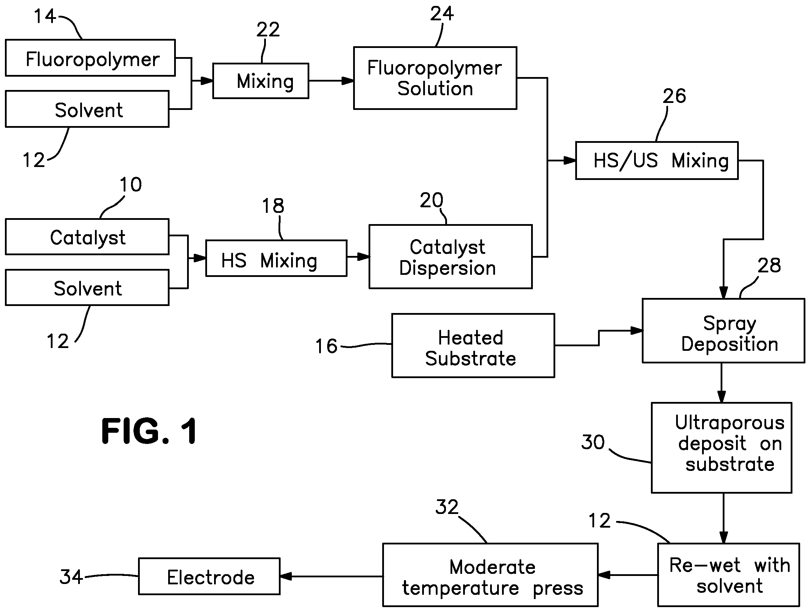

FIG. 1 schematically illustrates one method for making an electrode in accordance with the present disclosure. The process shows raw or starting materials used, including catalyst 10, solvent 12, fluoropolymer particles 14, and an electrode substrate 16. These materials are further discussed below, and FIG. 1 shows where each of these materials is used in the process.

Useful catalyst is preferably a particulate catalyst, preferably a supported particulate catalyst, and the catalyst can be one or more materials known to be useful in PAFC fuel cell operation. Suitable catalyst materials include, but are not limited to Pt, Pt-alloys, Pt and Pd core shell structures, metallocenes, non-noble metals and combinations thereof, and the catalyst can be supported on carbon such as Vulcan® XC72 (from Cabot Corporation)and heat-treated Vulcan® XC72. The catalyst is preferably nanostructured. The carbon catalyst supports are composed of sphereoidal primary carbon particles typically 20 - 80 nm in diameter which are aggregated into branching chains 100 to 1000 nm long. These branching chains give the carbon particles "structure" and impart good electrical contact between particles. The difference in anode and cathode supports is one of internal porosity of the primary particles. Pt and Pt alloys are the reaction centers supported on the carbon particles. Typically the metal particle size is 1 to 2 nm on the anode side and 5 - 10 nm on the cathode side.

Suitable electrode substrates can be electrode substrates having a thickness of between 50 microns and 500 microns. Suitable substrates include, but are not limited to T060 and T120 from Toray Industries, Tokyo, Japan, and Sigracet GDL 24 and 25 AA from SGL Technologies, Meitingen, Germany.

Soluble fluoropolymers according to the present disclosure are preferably soluble perfluoropolymers and can include amorphous fluoropolymers, partially or semi crystalline fluoropolymers and combinations thereof.

Suitable amorphous fluoropolymers include a family of copolymers of 2,2-bis(trifluoromethyl)-4, 5-difluoro-1,3-dioxole and tetrafluoroethylene (TFE), one suitable commercial example of which is DuPont's TEFLON AF®. Another suitable amorphous fluoropolymer is a family of copolymers of 2,2,4-trifluoro-5-trifluoromethoxy-1,3-dioxole and tetrafluoroethylene (TFE), one suitable commercial example of which is HYFLON AD® from Solvay. A further non-limiting example of suitable amorphous fluoropolymers includes a family of homopolymers made by cyclopolymerization of the perfluorinated diene, perfluoro-4 (vinyloxy-1-butene), one suitable commercial example of which is Cytop® from Asahi Glass. Another suitable family of homopolymer includes a family of polymers of substituted perfluoro 2-methylene-1,3-dioxolane monomers. Another non-limiting example is copolymers of substituted perfluoro 2-methylene-1,3-dioxolane monomers and perfluoro vinyl monomers.

Non-limiting examples of suitable semi-crystalline fluoropolymers include homopolymers of tetrafluoroethylene (TFE) such as polytetrafluoroethylene (PTFE). Another suitable example is a family of copolymers of TFE with hexafluoropropylene (FEP). Another suitable semi crystalline fluoropolymer is a family of copolymers of TFE and perfluoroalkoxy vinyl ethers.

A further non-limiting example of suitable semi crystalline fluoropolymer includes a family of copolymers of (TFE) and perfluorinated sulfonated vinyl ether either in proton form or in fluorosulfonate form, and preferably having greater than 1,200 equivalent weight. Another non-limiting example is a family of copolymers of TFE and perfluorinated sulfonimide vinyl ethers greater than 1,200 equivalent weight.

The amorphous fluoropolymers can be soluble in solvent at ambient temperatures, while the semi crystalline copolymers can require an elevated temperature in order to be soluble in solvent.

Suitable solvents for the additional suitable perfluoropolymer materials can be solvents taught by W.H. Tuminello and G.T. Dee in "Thermodynamics of Poly(tetrafluoroethylene) Solubility," Macromolecules 27 669-676 (1994); Dodecafluorocyclohexane (C₆F₁₂); octafluoronaphthalene (C₁₀F₈); perfluorotetracoseane (n-C₂₄F₅₀); perfluorotetradecahydrophenanthrene (C₁₄F₂₄); mixture of isomers of perfluoroperhydrobenzylnaphthalene (C₁₇F₃₀); perfluorotriexyl amine and similar compounds available commercially from 3M under the name Fluorinert®; oligomers of polyhexafluoropropylene oxide (e.g., DuPont Krytox® 16350); fluorocarbon oils; oligimers of tetrafluroethylene and combinations thereof. See also the solvents disclosed in U.S. Patent 5,683,557, 5,690,878 and 2,580,078.

Suitable solvent for the catalyst dispersion can be the same as for the fluoropolymer.

As shown in FIG. 1, the method starts by mixing the catalyst 10 and solvent 12, preferably in a high shear (HS) mixer 18. This results in a catalyst dispersion 20.

The fluoropolymer-catalyst dispersion is advantageously formed by mixing soluble fluoropolymer 14 with solvent 12 in a mixing step 22 to create a fluoropolymer solution 24. The fluoropolymer solution is mixed with catalyst and more solvent to form the desired fluoropolymer solution which may contain fluoropolymer at any desired level, for example at about 1 wt. %.

Continuing to refer to FIG. 1, catalyst dispersion 20 and fluoropolymer solution 24 are then mixed in a high sheer/ultra sheer mixing step 26. The solution and dispersion are preferably mixed to provide a desired ratio of catalyst to fluoropolymer, and this ratio can be tailored to the desired properties of the resulting electrode. Following this mixing step 26, the mixed solution is then deposited onto a heated substrate 16, for example through a spray deposition process 28, to produce deposit on the substrate, 30. The deposit is ultraporous due to the large volume of gas generated by solvent evaporation.

The heated substrate can have the catalyst/AF solution sprayed thereon until a desired electrode weight has been reached. At that point, the substrate and ultraporous deposit can be wetted with solvent 12, and then pressed 32 at moderate temperature and pressure to obtain desired thickness and electronic resistance of the electrode 34.

It should be noted that the mixing of the catalyst suspension can be carried out at high sheer, for example at about 13k rpm for 2 minutes when using an IKA high sheer mixer. This same sheer can then be continued for five additional minutes after addition of the fluoropolymer solution, and the mixture can then be sonicated using an ultrasonic sonicator, for example for five minutes with pulses of five seconds on and five seconds off, at power of 20%, 50 W.

The heated substrate can be heated on a metal plate at about 70°C before the fluoropolymer/catalyst solution/dispersion is sprayed on the substrate.

Spray deposit can be performed using an airbrush at 103,4214 kPa (15 psi) at ambient temperature, under nitrogen. The coating weight can be monitored until a platinum loading of 0.70 to 0.75 mg Pt/cm² for some types of substrates, and lower ranges such as 0.5 to 0.598 mg Pt/cm² for others. The final thickness of the resulting electrode can also be measured and recorded.

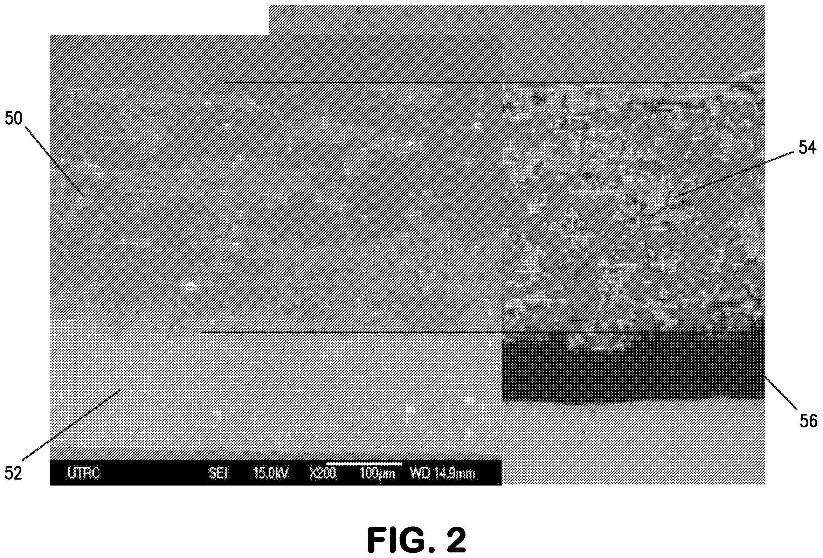

FIG. 2 compares the structure of a prior art PAFC electrode made with PTFE (left view) compared to an electrode made according to the present disclosure (shown in the right view). The illustration is a scanning electron micrograph (SEM) of the prior art electrode and an optical micrograph of the electrode according to the disclosure. Carbon paper electrode substrates 50, 54 are shown in each image, as are electrodes 52, 56.

FIG. 2 shows a graininess in the prior art electrode 52 which comes from an intermediate pore size of 1 to 3 microns formed from 3 to 10 micron particles resulting from fluid milling of the catalyst-PTFE floc. The image of the electrode made according to the present disclosure shows that the electrode 56 is made of sub-micron pores from pressing a mixture of sprayed fluoropolymer and catalyst, and is uniform and thinner. These characteristics are with respect to the catalyst layers, and it is clear that the catalyst layer in the image according to the present disclosure is far more uniform and thin.

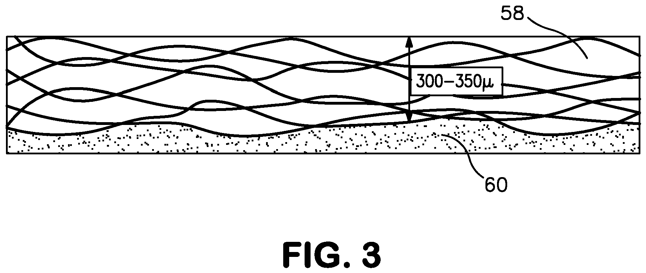

FIG. 3 structurally illustrates an electrode of the type to which the present disclosure is directed, and shows an electrode substrate 58 having a thickness of between 300-350 µ, and with a catalyst layer 60 disposed thereon. In accordance with the present disclosure, catalyst layer 60 is much thinner than the catalyst layer deposited on an electrode substrate in accordance with the prior art.

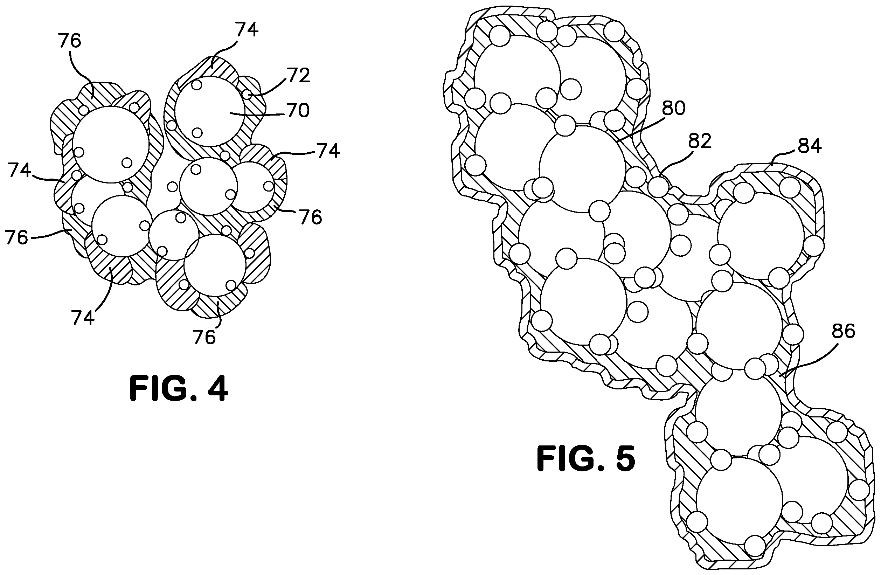

In order to further illustrate the advantageous structures obtained in accordance with the present disclosure, a portion of the catalyst layer of a prior art electrode made using prior art or known procedures was greatly enlarged (∼150,00X), as was a portion of the catalyst layer of an electrode made in accordance with the present disclosure. These two enlarged views correspond to magnifications of layer 60 of FIG. 3, and are shown in FIGS. 4 and 5, respectively.

FIG. 4 shows that catalyst in the form of carbon particles 70 and catalyst particles 72 disposed thereon are covered in some case by somewhat thick layers of fluoropolymer material 74, and in other instances are covered with somewhat thick layers of phosphoric acid 76. This is due to the fact that the fluoropolymer material tends to floc during prior art manufacture methods, and this results in clumps of fluoropolymer material 74 which do not completely and in any way uniformly surround the catalyst particles. The inconsistent and nonuniform fluoropolymer results in much greater concentrations of phosphoric acid migration during operation in the areas where there is not much fluoropolymer, and in other areas, the fluoropolymer itself is too thick. Thus, the enlarged illustration shown in Figure 4 highlights problems in accordance with the prior art wherein the fluoropolymer and, ultimately, the phosphoric acid are not distributed evenly.

FIG. 5 illustrates a magnified portion of a catalyst of an electrode made in accordance with the present disclosure, and advantageously shows an aggregate of catalyst particles including carbon particles 80, same as 70, and catalyst particles 82, same as 72, and this aggregate has a relatively thin and substantially uniform thickness layer 84 of fluoropolymer, with a relatively thin and substantially uniform layer 86 of phosphoric acid beneath same. The phosphoric acid is positioned underneath the layer of fluoropolymer because, during operation of the PAFC using this electrode, phosphoric acid tends to migrate toward the catalyst particles. The phosphoric acid wicks through gaps in the fluoropolymer when it reaches the fluoropolymer, and thus, FIG. 5 shows the phosphoric acid inside of the fluoropolymer layer, and both layers are relatively thin and substantially uniform in thickness.

Testing was made of an electrode having prior art fluoropolymer treatment with the standard fluoropolymer content and an electrode being treated in accordance with the present disclosure with half the standard fluoropolymer content.

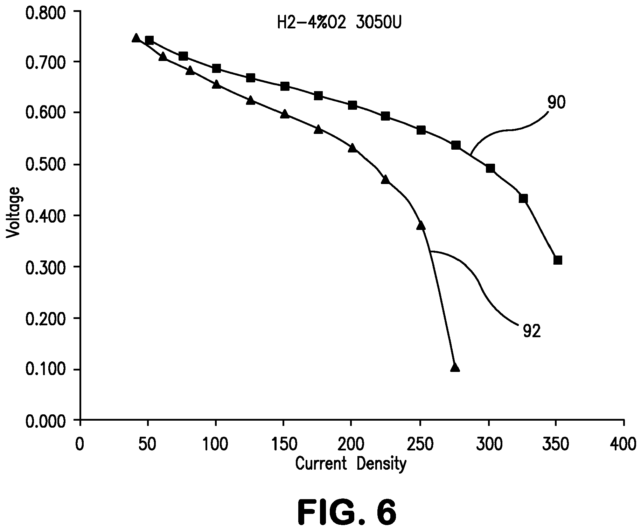

These electrodes were tested for diffusion limited current with 100 % hydrogen on the anode at 30 % utilization and 4 % oxygen balance, with nitrogen at 50 % utilization on the cathode. The results are presented in FIG. 6, wherein the electrode treated in accordance with the disclosure is shown at curve 90, while the prior art fluoropolymer treated electrode is shown at curve 92. As shown, the electrode treated with soluble fluoropolymer in accordance with the present disclosure provided the greatest current density per voltage, with significantly improved results over the prior art fluoropolymer treated.

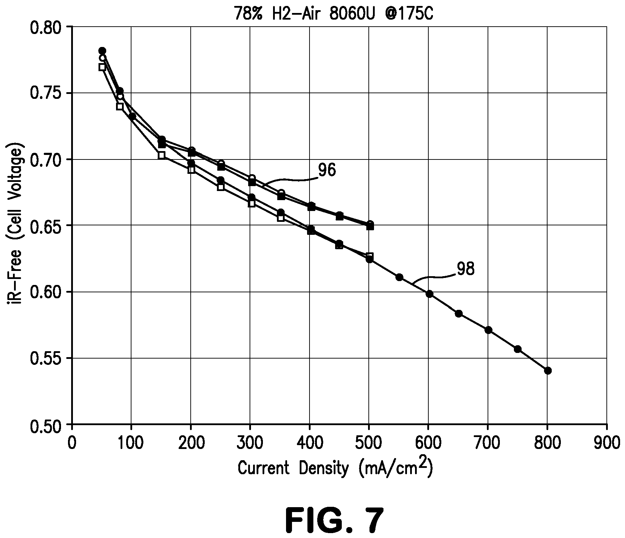

Testing was also conducted under typical stack conditions (175°C, 78% hydrogen on anode with 80% utilization, air on cathode with 60% utilization) was conducted for the prior art fluoropolymer treated electrode and an electrode treated with soluble fluoropolymer in accordance with the present disclose. FIG. 7 presents the results of this testing in terms of ir-free cell voltage vs. current density, and it is clear from FIG. 7 that the electrode treated with soluble fluoropolymer in accordance with the current disclosure provides an approximate 25% increase in power density, and an approximate 14 mV improvement at the operating point. FIG. 7 shows these results with curve 96 representing the electrode treated with soluble fluoropolymer in accordance with the present disclosure, and curve 98 representing the prior art treated electrode.

One or more embodiments of the present disclosure have been described. Nevertheless, it will be understood that various modifications may be made without departing from the scope of the claims. For example, it is possible to use other polymers stable in PAFC operating conditions which are soluble in a solvent from which a catalyst-polymer suspension may be made, and the use of alternate solvents for the fluoropolymers described, alternate methods of forming the catalyst layer other than spraying and warm pressing, for example, rod coating of the polymer-catalyst dispersion and the like can be carried out. Accordingly, other embodiments are within the scope of the following claims.

## Claims

1. A method for making an electrode (34) for a phosphoric acid fuel cell, comprising the steps of:
combining (26) catalyst particles (10) with a fluoropolymer solution (24) to form a catalyst - fluoropolymer dispersion;
depositing (28) the catalyst - fluoropolymer dispersion (20) onto a heated substrate (30) to produce a deposit on the substrate;
wetting (12) the deposit and the substrate with solvent; and
pressing (32) the wetted deposit and substrate to obtain the electrode (34).

2. The method of claim 1, wherein the fluoropolymer solution comprises a solution of an amorphous fluoropolymer (14) and a solvent (12).

3. The method of claim 1, wherein the catalyst particles (10) comprise a catalyst metal supported on carbon and wherein the catalyst metal is selected from the group consisting of Pt, Pt-alloys, Pt and Pd core-shell structures, metallocenes , non-noble metals and combinations thereof.

4. The method of claim 1, wherein the fluoropolymer (14) is a soluble fluoropolymer selected from the group consisting of amorphous fluoropolymers, semi crystalline fluoropolymers and combinations thereof.

5. The method of claim 1, wherein the pressing (32) is performed at a moderate temperature and pressure.

6. The method of claim 1, wherein the pressing (32) yields the electrode (34) of a desired thickness and resistance.

7. The method of claim 1, wherein the depositing comprises spray deposition (28).

8. The method of claim 1, wherein the deposit on the substrate is ultraporous due to gas generated by evaporation of solvent in the catalyst - fluoropolymer dispersion.

9. The method of claim 1, wherein the combining comprises
mixing (18) the catalyst particles and solvent into a catalyst dispersion;
mixing (22) the fluoropolymer and solvent to create a fluoropolymer solution; and
mixing (26) the catalyst dispersion and the fluoropolymer solution to obtain the catalyst - fluoropolymer dispersion.

10. The method of claim 9, wherein
the mixing (18) the catalyst particles and solvent is performed in a high sheer mixer; and
the mixing (22) the fluoropolymer and solvent is performed in a high sheer/ultra sheer mixer.

11. The method of claim 10, wherein the combining comprises
mixing the catalyst suspension at high sheer for 2 minutes;
adding the fluoropolymer solution to the catalyst suspension;
mixing the added fluoropolymer solution with the catalyst suspension at high sheer for 5 minutes after the adding; and
sonicating the mixture.

12. The method of claim 11, wherein the sonicating comprises using an ultrasonic sonicator for 5 minutes with pulses of 5 seconds on and 5 seconds off at a power of 20%, 50 W.

13. The method of claim 1, wherein the depositing is performed using an airbrush at 103,4214 kPa (15psi) at ambient temperature under nitrogen.

14. The method of claim 13, wherein the deposit is a coating having a platinum loading of 0.70 to 0.75 mg Pt/cm².

15. The method of claim 13, wherein the deposit is a coating having a platinum loading of 0.5 to 0.598 mg Pt/cm².

## Patentansprüche

1. Verfahren zum Herstellen einer Elektrode (34) für eine Phosphorsäure-Brennstoffzelle, umfassend die Schritte:
Vereinigen (26) von Katalysatorpartikeln (10) mit einer Fluorpolymerlösung (24), um eine Katalysator-Fluorpolymer-Dispersion zu bilden;
Abscheiden (28) der Katalysator-Fluorpolymer-Dispersion (20) auf ein erhitztes Substrat (30), um eine Abscheidung auf dem Substrat zu erzeugen;
Benetzen (12) der Abscheidung und des Substrats mit Lösemittel; und
Pressen (32) der/des benetzten Abscheidung und Substrats, um eine Elektrode (34) zu erhalten.

2. Verfahren nach Anspruch 1, wobei die Fluorpolymerlösung eine Lösung eines amorphen Fluorpolymers (14) und eines Lösemittels (12) umfasst.

3. Verfahren nach Anspruch 1, wobei die Katalysatorpartikel (10) ein auf Kohlenstoff geträgertes Katalysatormetall umfassen und wobei das Katalysatormetall ausgewählt ist aus der Gruppe bestehend aus Pt, Pt-Legierungen, Pt- und Pd-Kern-Schalen-Strukturen, Metallocenen, Nichtedelmetallen und Kombinationen davon.

4. Verfahren nach Anspruch 1, wobei das Fluorpolymer (14) ein lösliches Fluorpolymer ist, das ausgewählt ist aus der Gruppe bestehend aus amorphen Fluorpolymeren, halbkristallinen Fluorpolymeren und Kombinationen davon.

5. Verfahren nach Anspruch 1, wobei das Pressen (32) bei einer mäßigen Temperatur und einem mäßigen Druck ausgeführt wird.

6. Verfahren nach Anspruch 1, wobei das Pressen (32) die Elektrode (34) mit gewünschter Dicke und gewünschtem Widerstand liefert.

7. Verfahren nach Anspruch 1, wobei das Abscheiden Spritz-Abscheiden (28) umfasst

8. Verfahren nach Anspruch 1, wobei die Abscheidung auf dem Substrat ultraporös infolge von Gas ist, das durch Verdampfung von Lösemittel in der Katalysator-Fluorpolymer-Dispersion erzeugt wird.

9. Verfahren nach Anspruch 1, wobei das Vereinigen umfasst:
Mischen (18) der/des Katalysatorpartikel und Lösemittels zu einer Katalysatordispersion;
Mischen (22) des Fluorpolymers und Lösemittels, um eine Fluorpolymerlösung zu erzeugen; und
Mischen (26) der Katalysatordispersion und der Fluorpolymerlösung, um die Katalysator-Fluorpolymer-Dispersion zu erhalten.

10. Verfahren nach Anspruch 9, wobei
das Mischen (18) der/des Katalysatorpartikel und Lösemittels ausgeführt wird in einem High Shear-Mischer; und
das Mischen (22) des Fluorpolymers und Lösemittels ausgeführt wird in einem High Shear-/Ultra Shear-Mischer.

11. Verfahren nach Anspruch 10, wobei das Vereinigen umfasst:
Mischen der Katalysatorsuspension bei hoher Scherung für 2 Minuten;
Zugeben der Fluorpolymerlösung zu der Katalysatorsuspension;
Mischen der zugegebenen Fluorpolymerlösung mit der Katalysatorsuspension bei hoher Scherung für 5 Minuten nach dem Zugeben; und
Beschallen der Mischung.

12. Verfahren nach Anspruch 11, wobei das Beschallen das Verwenden einer Ultraschall-Beschallungsvorrichtung für 5 Minuten mit Pulsen von 5 Sekunden ein und 5 Sekunden aus bei einer Leistung von 20%, 50W, umfasst.

13. Verfahren nach Anspruch 1, wobei das Abscheiden unter Verwendung einer Airbrush-Vorrichtung bei 103.4214 kPa (15psi) bei Umgebungstemperatur unter Stickstoff ausgeführt wird.

14. Verfahren nach Anspruch 13, wobei die Abscheidung eine Beschichtung mit Platin-Beladung von 0,70 bis 0,75 mg Pt/cm² ist.

15. Verfahren nach Anspruch 13, wobei die Abscheidung eine Beschichtung mit Platin-Beladung von 0,5 bis 0,598 mg Pt/cm² ist.

## Revendications

1. Procédé de fabrication d'une électrode (34) pour une pile à combustible à acide phosphorique, comprenant les étapes constituées par :
la combinaison (26) de particules de catalyseur (10) avec une solution de fluoropolymère (24) de manière à former une dispersion catalyseur-fluoropolymère ;
le dépôt (28) de la dispersion catalyseur-fluoropolymère (20) sur un substrat chauffé (30) de manière à produire un dépôt sur le substrat ;
l'humidification (12) du dépôt et du substrat à l'aide d'un solvant ; et
l'application d'une pression (32) sur le dépôt et le substrat humidifiés de manière à obtenir l'électrode (34).

2. Procédé selon la revendication 1, dans lequel la solution de fluoropolymère comprend une solution d'un fluoropolymère amorphe (14) et un solvant (12).

3. Procédé selon la revendication 1, dans lequel les particules de catalyseur (10) comprennent un métal de catalyseur qui est supporté sur du carbone et dans lequel le métal de catalyseur est sélectionné parmi le groupe qui est constitué par le Pt, les alliages de Pt, les structures noyau-enveloppe en Pt et Pd, les métallocènes, les métaux non nobles et des combinaisons de ceux-ci.

4. Procédé selon la revendication 1, dans lequel le fluoropolymère (14) est un fluoropolymère soluble qui est sélectionné parmi le groupe qui est constitué par les fluoropolymères amorphes, les fluoropolymères semi-cristallins et des combinaisons de ceux-ci.

5. Procédé selon la revendication 1, dans lequel l'application d'une pression (32) est réalisée à une température et une pression modérées.

6. Procédé selon la revendication 1, dans lequel l'application d'une pression (32) permet d'obtenir l'électrode (34) d'une épaisseur et d'une résistance souhaitées.

7. Procédé selon la revendication 1, dans lequel le dépôt comprend un dépôt par pulvérisation (28).

8. Procédé selon la revendication 1, dans lequel le dépôt sur le substrat est ultraporeux du fait du gaz qui est généré par l'évaporation du solvant dans la dispersion catalyseur-fluoropolymère.

9. Procédé selon la revendication 1, dans lequel la combinaison comprend :
le mélange (18) des particules de catalyseur et du solvant selon une dispersion de catalyseur ;
le mélange (22) du fluoropolymère et du solvant de manière à créer une solution de fluoropolymère ; et
le mélange (26) de la dispersion de catalyseur et de la solution de fluoropolymère de manière à obtenir la dispersion catalyseur-fluoropolymère.

10. Procédé selon la revendication 9, dans lequel :
le mélange (18) des particules de catalyseur et du solvant est réalisé dans un mélangeur à cisaillement élevé ; et
le mélange (22) du fluoropolymère et du solvant est réalisé dans un mélangeur à cisaillement élevé/ultra-cisaillement.

11. Procédé selon la revendication 10, dans lequel la combinaison comprend :
le mélange de la suspension de catalyseur à cisaillement élevé pendant 2 minutes ;
l'ajout de la solution de fluoropolymère à la suspension de catalyseur ;
le mélange de la solution de fluoropolymère ajoutée avec la suspension de catalyseur à cisaillement élevé pendant 5 minutes après l'ajout ; et
la sonication du mélange.

12. Procédé selon la revendication 11, dans lequel la sonication comprend l'utilisation d'un sonicateur à ultrasons pendant 5 minutes avec des impulsions de temps d'activation de 5 secondes et des impulsions de temps de désactivation de 5 secondes à une puissance de 20 %, 50 W.

13. Procédé selon la revendication 1, dans lequel le dépôt est réalisé en utilisant un aérographe à 103,4214 kPa (15 psi) à température ambiante sous azote.

14. Procédé selon la revendication 13, dans lequel le dépôt est un revêtement qui comporte une charge de platine de 0,70 à 0,75 mg de Pt/cm².

15. Procédé selon la revendication 13, dans lequel le dépôt est un revêtement qui comporte une charge de platine de 0,5 à 0,598 mg de Pt/cm².
